# FASCICULE DE BREVET EUROPEEN

(11) **EP 0 805 925 B1**
(45) Date de publication et mention de la délivrance du brevet: **08.09.1999**
(21) Numéro de dépôt: 96901836.5
(22) Date de dépôt: 23.01.1996
(51) Int. Cl.: F16D 3/84, F16J 3/04

(54) **GAINE DE PROTECTION SOUPLE POUR ARTICULATIONS ET JOINTS ROTATIFS**
BIEGSAME SCHUTZHÜLLE FÜR DREHGELENKVERBINDUNGEN
FLEXIBLE PROTECTIVE SLEEVE FOR ROTARY JOINTS AND HINGES

(30) Priorité: 24.01.1995 FR 9501055
(43) Date de publication de la demande: 12.11.1997
(73) Titulaire: YAMAJANY (S.N.C), 13008 Marseille (FR)
(72) Inventeur: MERSCH, Patrick, F-13006 Marseille (FR)
(74) Mandataire: Roman, Michel
(86) Numéro de dépôt international: FR9600109
(87) Numéro de publication internationale: WO9623143

(56) Documents cités:
- EP-A- 0 157 559
- EP-A- 0 288 694
- EP-A- 0 339 397
- EP-A- 0 403 163
- EP-A- 0 545 629
- EP-A- 0 641 946
- FR-A- 2 717 542
- GB-A- 2 197 699
- PATENT ABSTRACTS OF JAPAN vol. 017, no. 548 (M-1490), 4 Octobre 1993 & JP,A,05 149448 (KYORAKU CO LTD), 15 Juin 1993,

## Description

La présente invention a pour objet une gaine de protection souple pour articulations et joints rotatifs.

Elle est surtout destinée à être disposée autour des joints lubrifiés de type "cardan" ou homocinétiques utilisés pour transmettre un mouvement à des organes mobiles, en particulier dans le domaine des véhicules à moteur, mais peut être adaptée à d'autre types d'articulations mécaniques, par exemples les rotules montées en bout des tringleries de direction.

Il existe une très grande variété de gaines souples pour joints de transmissions homocinétiques, cardans tripodes, à billes ou similaires; elles assurent une protection contre les corps étrangers, chocs et autres éléments extérieurs et sont agencées pour contenir de manière étanche la masse lubrifiante indispensable au joint articulé.

Ces dispositifs sont constitués d'un élément tubulaire conique en élastomère formé d'une partie centrale conique avec ondulations permettant la flexion et l'extension axiale, et d'extrémités comportant des zones de fixation permettant leur raccordement sur les éléments correspondants du joint articulé.

La grande majorité des gaines sont spécifiques à chaque application, notamment pour l'équipement des véhicules neufs. Pour réduire le nombre de références sur le marché du remplacement, certains modèles sont "universels", c'est-à-dire peuvent être montés sur une large gamme de joints de diamètres et longueurs différents. Cette "universalité" est obtenue en particulier au moyen d'une partie centrale formant soufflet et de zones de fixations multiples en gradins, munies ou non de nervures internes d'arrêt. (Voir par exemple les brevets N° DE 3 324 997, GB 2 156 452, EP 0 403 163 et DE 2 205 798).

Le brevet N° EP 0 339 387 (BOGE) concerne un soufflet "universel" de protection pour joints articulés de transmission mécanique, comportant à chaque extrémité plusieurs zones de fixation de diamètres différents dont au moins certaines d'entre elles peuvent être séparées de manière à ce qu'un soufflet déterminé puisse s'adapter à plusieurs joints articulés de dimensions différentes. Les zones de fixation de plus fort diamètre comportent à l'intérieur un bourrelet semi-circulaire ainsi que, dans le fond de la rainure externe destinée à recevoir un collier de serrage, une rainure semi-circulaire appropriée à recevoir un bourrelet semi-circulaire d'un autre soufflet; en outre une bride en "T" est disposée directement après la rainure externe de chacune de ces zones de fixation.

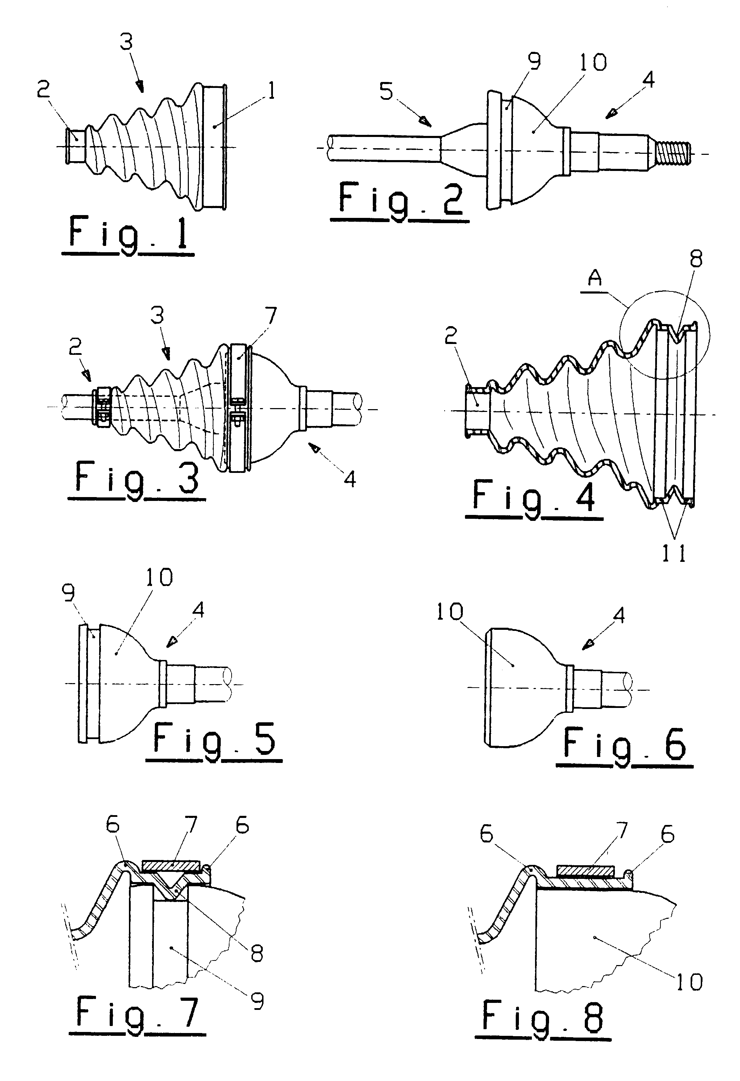

Cependant, les gaines de remplacement, pour être réellement universelles, doivent pouvoir s'adapter sur tous les types de rotules ou de "bols" (élément de plus grand diamètre du joint articulé). Or la surface externe de ces éléments peut revêtir des formes très diverses. Certains sont pourvus d'une gorge prévue pour recevoir une nervure interne d'arrêt, d'autres sont lisses et comportent ou non des épaulements empêchant tout mouvement de la zone de fixation de la gaine (Cf figures 5 et 6). Si la surface interne de cette zone de fixation comporte une nervure, elle pourra difficilement être montée sur une surface lisse, dans le cas contraire la fixation sera peu sûre, en raison de la faible surface de portée des bols pourvus d'une gorge.

Le dispositif selon la présente invention a pour objectif de remédier à cet état de choses. Il permet en effet de réaliser des gaines protectrices s'adaptant parfaitement à tous les types de rotules et "bols", qu'ils comportent ou non une gorge pour nervure d'arrêt.

Il est constitué d'une gaine souple conique à soufflet dont la zone de fixation de l'extrémité de plus fort diamètre comporte au moins un pli annulaire à flancs inclinés, à section en "V", en "U" ou en trapèze, à concavité dirigée vers l'extérieur et déterminé pour pouvoir s'insérer dans la gorge pour nervure d'arrêt de la rotule articulée ou du "bol" du joint rotatif lorsqu'elle existe, et s'effacer en s'ouvrant puis en s'aplatissant lorsque la surface externe de ladite rotule ou dudit bol est dépourvue de gorge.

Sur les dessins annexés, donnés à titre d'exemples non limitatifs de formes de réalisation de l'objet de l'invention:
les figures 1 et 2 représentent respectivement, vus de côté, une gaine de protection souple et un joint articulé,
la figure 3 montre dans les mêmes conditions un joint articulé équipé d'une gaine de protection souple,
la figure 4 est une coupe axiale d'une gaine souple conforme à l'invention pour joint rotatif,
les figures 5 et 6, déjà citées, montrent deux types de bols de joint articulé, l'un à surface externe pourvue d'une gorge, le second à surface externe lisse,
les figures 7 et 8 sont des coupes axiales agrandies du détail A de la figure 4, montrant la gaine selon l'invention montée respectivement sur un bol avec et sans gorge pour nervure d'arrêt,
et les figures 9, 10 et 11 montrent, à la même échelle, le principe de l'invention appliqué à une gaine équipée de surfaces de fixation à gradins, tout en illustrant différentes formes des plis annulaires.

Le dispositif, figures 4 et 7 à 9, est constitué d'une gaine ou manchon conique réalisé dans un matériau souple résistant aux lubrifiants, tel que caoutchouc ou élastomère, et comportant trois parties: deux extrémités 1, 2 permettant de fixer de manière étanche ledit manchon sur chacun des deux demi-arbres 4, 5 accouplés du joint articulé, et un soufflet 3 central déformable et extensible, l'ensemble étant rempli de graisse destinée à lubrifier les éléments mécaniques du joint articulé.

Les extrémités 1, 2 forment respectivement des zones de fixation cylindriques de grand et de petit diamètre, et sont pourvus de nervures externes 6 destinées à maintenir en place un collier de serrage 7.

Contrairement aux dispositifs connus qui comportent des nervures d'arrêt pleines, la zone de fixation de plus grand diamètre est pourvue d'un pli annulaire 8 à concavité dirigée vers l'extérieur de la gaine et dont les flancs inclinés s'écartent l'un de l'autre en allant de l'intérieur vers l'extérieur, de manière à permettre audit pli de pénétrer dans la gorge 9 des bols 10 ou rotules qui en sont pourvus (figure 7), ou au contraire de s'ouvrir et d'être aplati lors de la fixation du collier de serrage 7 dans le cas des rotules ou bols à surface externe lisse (figure 8).

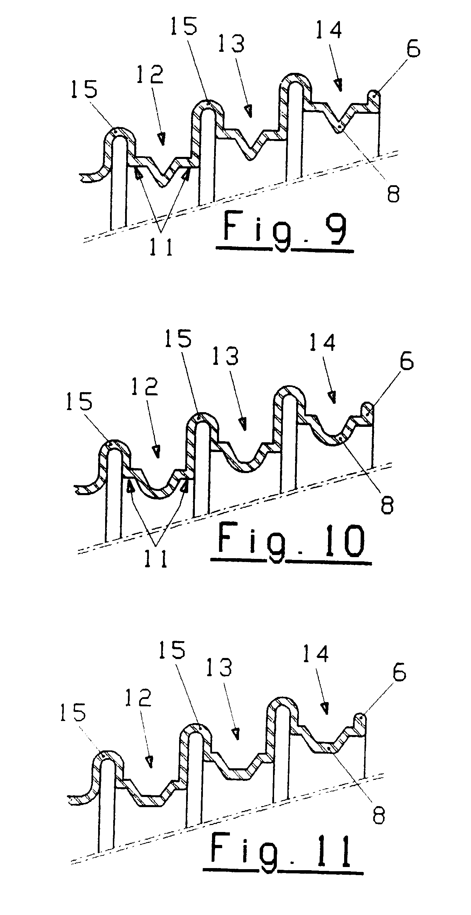

La section des plis annulaires aura de préférence la forme d'un "V" à pointe orientée vers l'intérieur de la gaine (figure 9), mais pourra également être en "U" (figure 10) ou en trapèze (figure 11). Les plis 8 pourront avantageusement être encadrés par deux plages cylindriques planes 11 portant sur la surface externe du bol 10 ou de la rotule.

Les zones de fixation 1, 2 peuvent être composées d'une série d'éléments cylindriques successifs 12, 13, 14 de diamètres internes croissants, ou décroissants, formant gradins. Ces éléments cylindriques seront avantageusement agencés de façon à permettre de couper aisément les parties inutiles se trouvant au-delà du collier de serrage 7, grâce à des bourrelets périphériques 15 servant de repères de découpage et d'aide au positionnement du collier de serrage.

Les éléments cylindriques 12, 13, et 14 de l'extrémité de grand diamètre 1, et éventuellement ceux de celle de petit diamètre 2, seront chacun pourvus d'un pli annulaire 8 aplatissable à concavité interne.

Le soufflet 3 central conique pourra comporter des ondulations formant une spirale unique, en particulier pour l'équipement des joints rotatifs. En effet la rotation de la transmission, y compris donc du soufflet central 3 et de la graisse incluse, entraîne cette dernière, sous l'effet de la force centrifuge, à suivre la spirale en direction du plus grand diamètre (extrémité 1, figure 1). C'est précisément dans cette zone que se trouvent les éléments mécaniques qui ont besoin de graissage (joints, roulements, etc). Cet effet augmente en outre avec la vitesse de rotation.

Le dispositif selon l'invention est avant tout conçu pour les joints homocinétiques de transmission et les rotules de tringlerie de direction, mais il peut s'adapter à d'autres utilisations similaires.

Le positionnement des divers éléments constitutifs donne à l'objet de l'invention un maximum d'effets utiles qui n'avaient pas été, à ce jour, obtenus par des dispositifs similaires.

## Revendications

1. Gaine de protection souple pour articulations mécaniques et joints rotatifs, destinée surtout à être disposée autour des rotules de tringlerie de direction ou des joints lubrifiés de type "cardan" ou homocinétiques utilisés pour transmettre un mouvement à des organes mobiles, en particulier dans le domaine des véhicules à moteur, constituée d'un élément tubulaire conique en matériau souple tel que caoutchouc ou élastomère, formé d'une partie centrale (3) conique avec ondulations permettant la flexion et l'extension axiale, et d'extrémités (1, 2) comportant chacune une ou plusieurs zones de fixation cylindriques permettant leur raccordement sur les éléments correspondants de l'articulation mécanique,
caractérisée en ce que la ou les zones de fixation de l'extrémité de plus fort diamètre (1) comportent un pli annulaire (8) à section en forme de "V" ou de trapèze, à concavité dirigée vers l'extérieur de la gaine et à flancs inclinés s'écartant l'un de l'autre en allant de l'intérieur vers l'extérieur, déterminés de façon à ce que ledit pli annulaire puisse s'insérer dans la gorge (9) pour nervure d'arrêt de la rotule ou du "bol" (10) du joint rotatif lorsqu'elle existe, et s'ouvrir, puis s'effacer en s'aplatissant sous l'effet du dispositif de serrage lorsque la surface externe de ladite rotule ou dudit bol est dépourvue de gorge.

2. Dispositif selon la revendication 1, se caractérisant par le fait que les plis annulaires (8) des zones de fixation sont encadrés par deux plages planes (11) cylindriques portant sur la surface externe de la rotule ou du "bol" (10) du joint rotatif.

3. Dispositif selon l'une quelconque des revendications précédentes, se caractérisant par le fait que les ondulations du soufflet central (3) conique forment une spirale unique.

4. Dispositif selon l'une quelconque des revendications précédentes, se caractérisant par le fait que la zone de fixation de grand diamètre (1) est composée de plusieurs éléments cylindriques successifs (12, 13, 14) de diamètres internes croissants formant gradins et pourvus chacun d'un pli annulaire (8) en "V" ou en trapèze.

5. Dispositif selon l'une quelconque des revendications précédentes, se caractérisant par le fait que la zone de fixation de petit diamètre (2) est composée de plusieurs éléments cylindriques successifs formant gradins.

6. Dispositif selon l'une quelconque des revendications 4 et 5, se caractérisant par le fait que les éléments cylindriques (12, 13, 14) sont pourvus de bourrelets périphériques (15) servant de repères de découpage et d'aide au positionnement du collier de serrage (7), et agencés de façon à permettre de couper aisément les parties inutiles se trouvant au-delà du collier de serrage (7).

## Patentansprüche

1. Elastische Schutzhülle für mechanische Gelenke und Drehverbindungen in der Hauptsache bestimmt zur Anordnung um Gelenke von Steuerungsgestängen oder geschmierten Verbindungen wie Kardangelenke oder Gleichganggelenke, benutzt zur Übertragung einer Bewegung auf mobile Organe, insbesondere auf dem Gebiet von Motorfahrzeugen, bestehend aus einem konischen rohrförmigen Teil aus elastischem Werkstoff wie Gummi oder Elastomer, gebildet aus einem konischen Mittelteil (3) mit Wellenausbildungen, welche die Biegung und axiale Streckung ermöglichen, und Endteilen (1, 2) mit jeweils einem oder mehreren zylindrischen Befestigungsbereichen, die ihren Anschluß an entsprechende Bestandteile des mechanischen Gelenks ermöglichen, dadurch gekennzeichnet, daß
der bzw. die Befestigungsbereiche des Endteils mit dem größeren Durchmesser rundum eine Falte (8) mit V- oder trapezförmigem Querschnitt aufweisen, deren Konkavität nach der Außenseite der Schutzhülle gerichtet ist, und deren schräge Flanken sich von innen nach außen spreizen auf eine Weise, daß die besagte Falte sich in die Kehle (9) einfügen kann, als Verschlußrippe des Kugelgelenks oder der "Schale" (10) der Drehverbindung, wenn eine solche vorhanden ist, und sich öffnen und dann durch Ebnen unter der Wirkung der Spannvorrichtung zurückziehen kann, wenn die Außenfläche des besagten Kugelgelenks bzw. der besagten Schale keine Kehle aufweist.

2. Vorrichtung gemäß Anspruch 1, dadurch gekennzeichnet, daß die umlaufenden Falten (8) der Befestigungsbereiche von zwei zylindrischen, ebenen Bändern (11) gerahmt sind, welche auf der Fläche des Kugelgelenks oder der "Schale" (10) der Drehverbindung anliegen.

3. Vorrichtung gemäß irgendeinem der vorhergehenden Ansprüche dadurch gekennzeichnet, daß die Wellenausbildungen des Mittelbalgs (3) eine einzige Spirale bilden.

4. Vorrichtung gemäß irgendeinem der vorhergehenden Ansprüche, dadurch gekennzeichnet, daß der Befestigungsbereich großen Durchmessers (1) aus mehreren aufeinanderfolgenden zylindrischen Teilen (12, 13, 14) mit progressiv größeren Innendurchmessern besteht, welche Stufen bilden und jeweils mit einer umlaufenden V- oder trapezförmigen Falte (8) versehen sind.

5. Vorrichtung gemäß irgendeinem der vorhergehenden Ansprüche, dadurch gekennzeichnet, daß der Befestigungsbereich kleinen Durchmessers (2) aus mehreren aufeinanderfolgenden zylindrischen Teilen, welche Stufen bilden, besteht.

6. Vorrichtung gemäß irgendeinem der Ansprüche 4 oder 5, dadurch gekennzeichnet, daß die zylindrischen Teile (12, 13, 14) mit umlaufenden Wülsten (15) versehen sind, die als Stanzmarkierung und Positionierhilfe der Spannschelle (7) dienen und so angeordnet sind, daß sie ein leichtes Abtrennen des unnützen, über die Spannschelle (7) hinausstehenden Werkstoffs erlauben.

## Claims

1. Flexible protective sleeve for rotary joints and mechanical articulations above all designed to be installed around steering linkages or lubricated joints type gimbal or homokinetic used to transmit movement to mobile systems, especially in the field of motor-driven vehicles, consisting of a tapered tubular part in flexible material such as rubber or elastomer, formed of a tapered central part (3) with corrugations to allow flexural and axial movement, and ends (1, 2) each one comprising one or several cylindrical zones enabling their fixing onto the corresponding elements of the mechanical articulation,
characterised in that the zone(s) fixing the largest diameter end (1) has an annular fold (8) with V or trapezoidal section, and concavity directed towards the outside of the sleeve and sloping sides separating one from the other, moving from the inside to the outside, determined so that the said annular fold can be inserted into a groove (9) for the stop rib of the ball (10) of the rotary joint when existing, and opens and then is eliminated by flattening out under the effect of the clamping device when the outer surface of the said ball is without throat.

2. Device according to claim 1 characterised in that the annular folds (8) of the fixing zones are enclosed within two flat cylindrical surfaces (11) bearing on the outer surface of the ball (10) of the rotary joint.

3. Device according to any one of the aforesaid claims characterised in that the corrugations of the tapered central bellows (3) form a single spiral.

4. Device according to any one of the aforesaid claims characterised in that the large diameter fixing zone (1) consists of several successive stepped cylindrical elements (12, 13, 14) of increasing internal diameters, and each one with a V or trapezoidal-shaped annular fold (8).

5. Device according to any one of the aforesaid claims characterised in that the small diameter fixing zone (2) consists of several successive stepped cylindrical elements.

6. Device according to any one of claims 4 and 5 characterised in that the cylindrical elements (12, 13, 14) are equipped with peripheral bands (15) serving as cutting marks and helping to position the clamping ring (7) and arranged to allow easy cutting of the unused parts beyond the clamping ring (7).
